# EUROPÄISCHE PATENTSCHRIFT

(11) **EP 1 262 754 B1**
(45) Veröffentlichungstag und Bekanntmachung des Hinweises auf die Patenterteilung: **12.11.2008**
(21) Anmeldenummer: 02405300.1
(22) Anmeldetag: 15.04.2002
(51) Int. Cl.: G01K 7/02

(54) **Verfahren zur zerstörungsfreien Qualitätsprüfung eines insbesondere bei hohen Temperaturen und/oder Vibrationen einsetzbaren Thermoelements**
Method for non-destructive testing of the quality of a high-temperature/high vibration suited thermoelement
Méthode pour tester d'une façon nondestructive un thermocouple destiné à un environnement à haute température et vibrations

(30) Priorität: 09.05.2001 CH 20010840
(43) Veröffentlichungstag der Anmeldung: 04.12.2002
(73) Patentinhaber: Alstom Technology Ltd, 5400 Baden (CH)
(72) Erfinder: Baumann, Robert, 5313 Klinganu (CH); Class, Michael, 5417 Untersiggenthal (CH)

(56) Entgegenhaltungen:
- US-A- 4 164 433
- M.J. ROBERTS ET AL: "DERIVATION AND TESTING OF A MODEL TO CALCULATE ELECTRICAL SHUNTING AND LEAKAGE ERRORS IN SHEATHED THERMOCOUPLES" REVIEW OF SCIENTIFIC INSTRUMENTS., Bd. 48, Nr. 9, September 1977 (1977-09), Seiten 1179-1191, XP002176249 AMERICAN INSTITUTE OF PHYSICS. NEW YORK., US ISSN: 0034-6748

## Beschreibung

### TECHNISCHES GEBIET

Die vorliegende Erfindung bezieht sich auf das Gebiet der Qualitätssicherung. Sie betrifft ein Verfahren zur zerstörungsfreien Qualitätsprüfung eines Thermoelements gemäss dem Oberbegriff des Anspruchs 1.

### STAND DER TECHNIK

Die Hochtemperatur-Verbindungsstelle ("hot junction"), d.h. die Stelle, an der die beiden unterschiedlichen Drähte des Thermoelements miteinander verbunden bzw. verschweisst sind, ist der wichtigste Bereich eines Thermoelements. Seine Qualität hat einen direkten Einfluss auf die zu erwartende Lebensdauer im Einsatz bei extremen Umgebungsbedingungen, wie sie beispielsweise beim Einsatz des Thermoelements in einer Gasturbine herrschen. Untersuchungen bisheriger Schadensfälle haben ergeben, dass Ermüdungsbrüche der Drähte, induziert durch Vibration und Belastungswechsel, einen der wesentlichen Gründe für einen Ausfall der Thermoelemente darstellen.

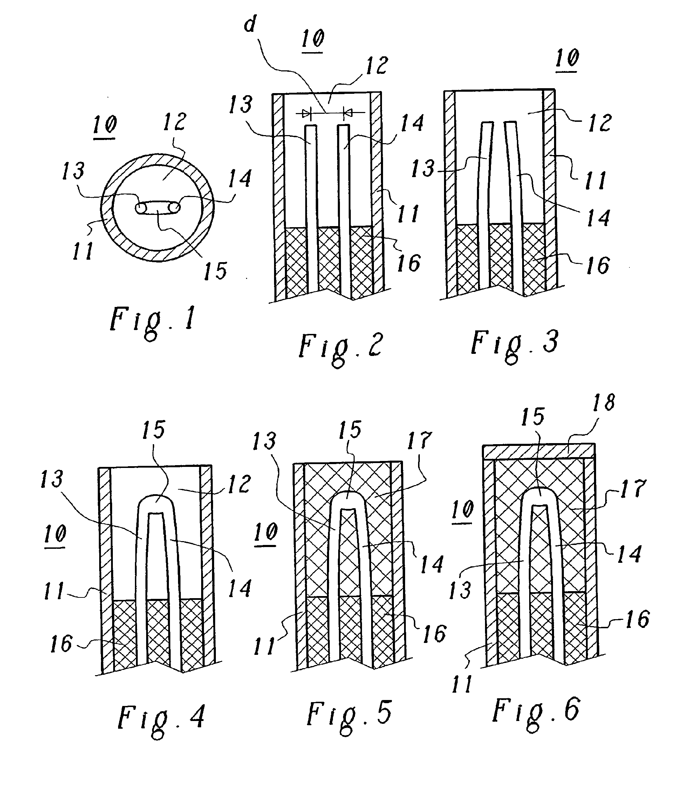

Die Gründe dafür können anhand der Fig. 1 bis 8 erläutert werden: Bei einem in Fig. 1 im Querschnitt gezeigten Thermoelement 10 sind innerhalb eines geschlossenen Mantels 11 zwei Drähte 13, 14 aus hinsichtlich des thermoelektrischen Effektes abgestimmten Metallen bzw. Metalllegierungen angeordnet, die weitgehend parallel verlaufen und an ihren Enden durch eine Schweissverbindung 15 miteinander verbunden sind und so eine "hot junction" bilden. Der Innenraum 12 des Mantels 11 ist mit einer Isolation gefüllt, die beispielsweise aus komprimiertem MgO-Pulver besteht.

Thermoelemente dieser Art können nun auf unterschiedlichen Wegen hergestellt werden, die für die spätere Lebensdauer von grosser Bedeutung sind. Bei dem in den Fig. 2 bis 6 dargestellten Herstellungsweg, der das Thermoelement 10 jeweils im Längsschnitt zeigt, wird von einem Paar parallel verlaufender Drähte 13, 14 ausgegangen, die noch unverbunden sind und innerhalb des Mantels 11 zunächst vollständig in eine Isolation aus hochkomprimiertem (MgO-)Pulver eingebettet sind. Die Drähte 13, 14 werden dann ― z.B. durch Sandstrahlen ― über eine grössere Länge, beispielsweise über mehrere Millimeter, von der Isolation 16 befreit (Fig. 2). Die freien Enden der Drähte 13, 14 werden dann von der parallelen Orientierung abweichend aufeinander zu gebogen (Fig. 3) und anschliessend durch eine Schweissverbindung 15 miteinander verschweisst (Fig. 4). Der freie Innenraum 12 wird dann wieder mit einer Isolation 17 aus (MgO-)Pulver gefüllt (Fig. 5) und schliesslich durch einen (verschweissten) Abschluss 18 verschlossen (Fig. 6). Die Isolation 17 ist dabei herstellungstechnisch bedingt weniger stark komprimiert als die Isolation 16, was in den Fig. 5 und 6 durch eine andere Schraffur angedeutet ist.

Bei dieser Art der Herstellung treten zwei Probleme auf, die zu einem Ausfall der Thermoelemente führen können und daher die Qualität mindern: Zum einen sind beim Freilegen der Drähte mittels Sandstrahlen die Drähte einer Vibrationsbelastung ausgesetzt, welche die Drähte und/oder die Schweissverbindung mehr oder weniger stark schädigen können. Zum anderen ist die mechanische Unterstützung der Drähte 13, 14 durch die später aufgefüllte, weniger stark komprimierte Isolation 17 deutlich geringer, so dass auch während des Betriebes die Drähte höheren Belastungen ausgesetzt sind.

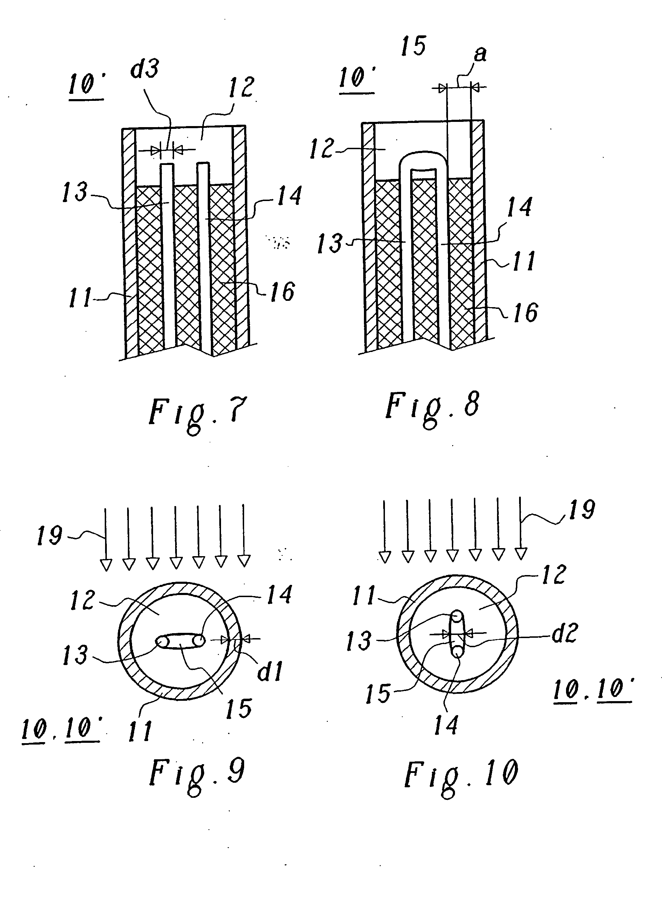

Beim anderen Herstellungsweg gemäss Fig. 7 und 8 werden beim Thermoelement 10' nur die unmittelbaren Enden der Drähte 13, 14 freigelegt und miteinander verschweisst (Schweissverbindung 15). Das Auffüllen und Verschliessen erfolgt dann analog zu den Fig. 5 und 6. Die Drähte 13, 14 werden bei dieser Art der Herstellung sowohl während der Herstellung als auch im späteren Betrieb wesentlich weniger mechanisch belastet.

Um das Risiko eines Ausfalls des Thermoelements im späteren Betrieb so gering wie möglich zu halten, sollten Thermoelemente, die gemäss Fig. 2 bis 6 hergestellt worden sind, bei der Eingangskontrolle möglichst erkannt und als nicht geeignet ausgesondert werden. Es ist daher wünschenswert, ein Verfahren zu haben, mit dem zerstörungsfrei nachgeprüft werden kann, nach welcher der beiden oben beschriebenen Arten die Herstellung der Thermoelemente erfolgt ist.

Aus der EP-A1-1 186 870 ist ein in Keramikpulver in einem Rohr eingeschlossenes Thermoelement bekannt, dessen Funktion in einem Bad aus geschmolzenem Metall getestet wird.

Aus der Druckschrift M.J.Roberts et al.: "Derivation and testing of a model to calculate electrical shunting and leakage errors in sheathed thermocouples", Rev. Sci. Instr., Bd. 48, Nr.9, September 1977, S.1179-1191, ist bekannt, für ein solches in einem Schutzrohr in Pulver eingebettetes Thermoelement anhand eines 3-Draht-Leitungsmodells die im Betrieb auftretenden Messfehler zu berechnen und experimentell zu verfizieren.

### DARSTELLUNG DER ERFINDUNG

Es ist daher Aufgabe der Erfindung, ein Verfahren anzugeben, mit dem Thermoelemente auf einfache Weise zerstörungsfrei auf ihre Eignung für Einsätze bei extremen Umgebungsbedingungen geprüft werden können.

Die Aufgabe wird durch die Gesamtheit der Merkmale des Anspruchs 1 gelöst. Der Kern der Erfindung besteht darin, das Thermoelement senkrecht zur Ebene der Drähte mittels Röntgenstrahlung zu durchleuchten und eine Röntgenaufnahme zu machen, dann aus der Röntgenaufnahme die Lage der Drähte in der Nähe der Schweissverbindung zu bestimmen, und schliesslich aus der Lage der Drähte in der Nähe der Schweissverbindung auf die Qualität des Thermoelements zu schliessen. Die Lage der Drähte gibt indirekt Aufschluss darüber, wie weit die Drähte beim Herstellen der Schweissverbindung freigelegt worden sind bzw. wo die Grenze zwischen dem hochkompaktierten Isolationspulver und dem weniger kompaktierten später aufgefüllten Isolationspulver liegt.

Insbesondere wird die Qualität des Thermoelements als akzeptabel angenommen, wenn die Drähte bis zur Schweissverbindung vollständig parallel verlaufen, während die Qualität des Thermoelements als nicht akzeptabel angenommen wird, wenn die Drähte einige Millimeter vor der Schweissverbindung von der parallelen Anordnung abweichend aufeinander zu gebogen bzw. abgekröpft sind.

Wenn die Drähte in der parallelen Anordnung einen vorgegebenen ersten Abstand aufweisen, wird die Qualität des Thermoelements vorzugsweise dann als nicht akzeptabel angenommen, wenn sich der Abstand der Drähte im abgekröpften Bereich um mehr als ein Drittel des ersten Abstandes verringert.

Besonders vorteilhaft ist es, wenn gemäss einer Ausgestaltung der Erfindung aus der Röntgenaufnahme zusätzlich die Dicke des Mantels und/oder der Abstand der Schweissverbindung zum Mantel und/oder die Dicke der Schweissverbindung und/oder die Dicke der Drähte ermittelt und zur Qualitätsbestimmung herangezogen wird. Hierdurch können zusätzlich und ohne weiteren Aufwand Rückschlüsse auf die Stabilität des Mantels, die Qualität der Schweissverbindung und die Lage der Schweissverbindung relativ zum Mantel (Zentrierung etc.) gezogen werden.

Besonders umfassend sind diese Kontrollen, wenn gemäss einer bevorzugten Weiterbildung zusätzlich zur Röntgenaufnahme senkrecht zur Ebene der Drähte eine Röntgenaufnahme in einer um 90° gedrehten Richtung aufgenommen und zur Qualitätsbestimmung herangezogen wird.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: den Querschnitt durch ein Thermoelement, wie es durch das erfindungsgemässe Verfahren geprüft werden soll, oberhalb der "hot junction";
- Fig. 2-6: anhand eines Längsschnittes verschiedene Schritte bei der Herstellung eines Thermoelements, wie es durch das erfindungsgemässe Verfahren als nicht geeignet ausgesondert werden soll;
- Fig. 7-8: anhand eines Längsschnittes verschiedene Schritte bei der Herstellung eines Thermoelements, wie es durch das erfindungsgemässe Verfahren als geeignet erkannt werden soll;
- Fig. 9: das Schema einer Röntgenaufnahme senkrecht zur Ebene der Drähte des Thermoelements;
- Fig. 10: das Schema einer Röntgenaufnahme parallel zur Ebene der Drähte des Thermoelements;
- Fig. 11: die Röntgenaufnahme eines gemäss Fig. 2-6 hergestellten Thermoelements;
- Fig. 12: den Vergleich der Röntgenaufnahmen zweier Thermoelemente, von denen das eine (linke Aufnahme) als geeignet und das andere (rechte Aufnahme) als nicht geeignet eingestuft wird.

### WEGE ZUR AUSFÜHRUNG DER ERFINDUNG

Eine geeignete Methode zur Kontrolle der Qualität des Herstellungsprozesses ist die Bestimmung der freien, nicht oder nicht ausreichend unterstützten Länge des Thermoelements bzw. der Drähte, die mit ihrer Verbindung das Thermoelement bilden. Die freie Länge der Drähte wird durch die Grenze zwischen der hochkompaktierten Isolation (16 in Fig. 6) und der weniger kompaktierten (losen) Isolation (17 in Fig. 6) markiert. Um ein ummanteltes Thermoelement in dieser Hinsicht zerstörungsfrei prüfen zu können, kann auf Röntgenaufnahmen zurückgegriffen werden. Da derartige Röntgenaufnahmen die Grenze zwischen den unterschiedlichen Gebieten der Isolation (16, 17) nicht direkt zeigen, muss diese Grenze indirekt ermittelt werden. Hierzu werden gemäss der Erfindung Lage und Verlauf der Drähte 13, 14 in der Nähe der Schweissverbindung 15 herangezogen. Weichen die in einer Röntgenaufnahme deutlich sichtbaren, an sich parallel verlaufenden Drähte 13, 14, beispielsweise auf den letzten Millimetern, vor der Schweissverbindung 15 von der parallelen Orientierung ab, ist dies ein eindeutiger Hinweis darauf, dass die Drähte bei der Herstellung über diese Entfernung freigelegt worden und beim fertigen Thermoelement von einer weniger kompaktierten Isolation umgeben sind.

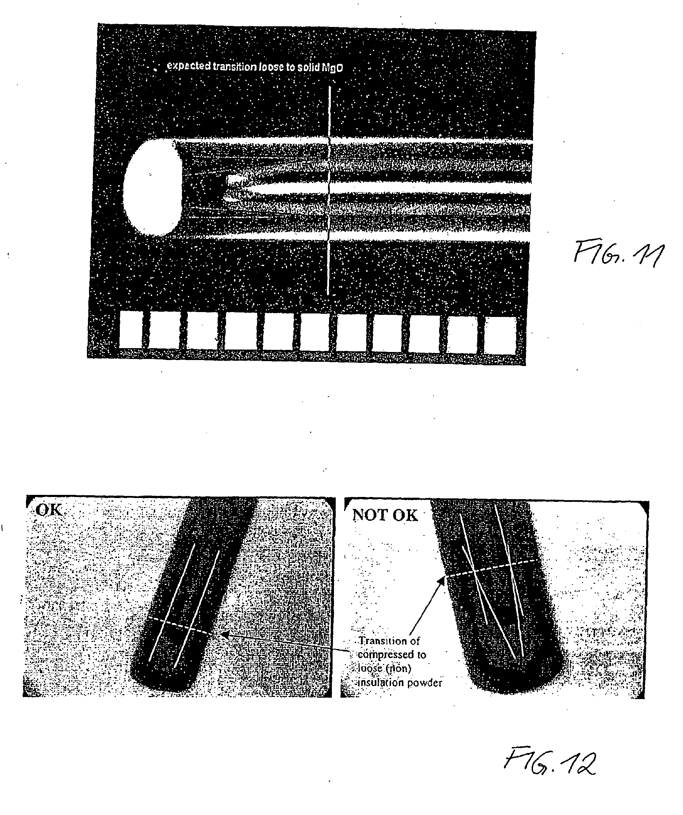

Zur Feststellung der Lage und des Verlaufs der Drähte 13 und 14 in der Nähe der Schweissverbindung 15 wird zunächst gemäss Fig. 9 eine Röntgenaufnahme des Thermoelements 10 bzw. 10' gemacht, bei der die Röntgenstrahlung 19 senkrecht zur Ebene einfällt, in der die Drähte 13, 14 liegen. Es ergibt sich dann für ein gemäss Fig. 2 bis 6 hergestelltes Thermoelement eine Aufnahme wie in Fig. 11 gezeigt. In dieser Aufnahme sind dünne horizontale (weisse) Hilfslinien eingezeichnet, die den Verlauf bzw. die Orientierung der beiden Drähte im Bereich der Schweissverbindung andeuten. Eine weitere senkrechte (weisse) Hilfslinie, die etwa 3-4 mm von der Schweissverbindung entfernt ist, markiert die Grenze zwischen den unterschiedlich dichten Isolationen (16, 17 in Fig. 6). Ein solches Thermoelement wird als nicht geeignet zurückgewiesen.

Einen Vergleich zwischen den entsprechenden Röntgenaufnahmen eines geeigneten und eines nicht geeigneten Thermoelements zeigt Fig. 12. In der linken Röntgenaufnahme verlaufen die Drähte gemäss den durchgezogenen (weissen) Hilfslinien bis zur Schweissverbindung vollkommen parallel. Die Grenze zwischen den Isolationsbereichen (gestrichelte weisse Hilfslinie) verläuft direkt unterhalb der Schweissverbindung. In der rechten Röntgenaufnahme sind die Drähte einige Millimeter unterhalb der Schweissverbindung abgewinkelt (durchgezogene weisse Hilfslinien). Die Grenze zwischen den Isolationsbereichen (gestrichelte weisse Hilfslinie) verläuft entsprechend einige Millimeter unterhalb der Schweissverbindung.

Zusätzlich zu der Röntgenaufnahme, bei der die Röntgenstrahlung 19 senkrecht zur Ebene der Drähte orientiert ist, kann gemäss Fig. 10 eine weitere Röntgenaufnahme gemacht werden, bei der die Röntgenstrahlung 19 relativ zur ersten Aufnahme um 90° gedreht einfällt. Aus beiden Aufnahmen können dann zur weiteren Qualitätssicherung zusätzlich die Dicke d1 des Mantels 11 in der Nähe der Schweissverbindung (Fig. 9), die Dicke d2 bzw. Qualität der Schweissverbindung 15 (Fig. 10), die Qualität des verschweissten Abschlusses (18 in Fig. 6), der Abstand a bzw. die Position der Schweissverbindung 15 relativ zum Mantel (Fig. 8) und die Dicke d3 der Drähte 13, 14 (Fig. 7) bestimmt und überprüft werden.

Die Röntgenaufnahmen können grundsätzlich manuell durchgeführt werden, wobei zwischen den Aufnahmen entweder das Thermoelement 10, 10' oder die Röntgenapparatur um 90° gedreht wird.

Es ist aber ebensogut auch denkbar, die Untersuchung automatisch mit einem Online-Röntgensystem und einer rechnergestützten Bilderkennung vorzunehmen: Das Thermolement oder die Röntgenapparatur werden zunächst solange gedreht, bis eine der in Fig. 9 und 10 gezeigten Orientierungen erreicht ist. Dann wird eine erste Aufnahme gemacht. Nach einer Drehung um 90° wird eine zweite Aufnahme gemacht. Beide Aufnahmen werden dann mit einer geeigneten Software (hinsichtlich Lage und Verlauf der Drähte sowie der geometrischen Konfiguration) nach vorgegebenen Kriterien ausgewertet. Schliesslich werden die untersuchten Thermoelemente als brauchbar oder unbrauchbar qualifiziert.

Insgesamt ergibt sich mit der Erfindung ein sehr einfaches, zerstörungsfreies Verfahren zur Bestimmung der Qualität von (kommerziell erhältlichen) Thermoelementen für Anwendungsfälle mit erhöhten Anforderungen.

### BEZUGSZEICHENLISTE

- 10,10': Thermoelement
- 11: Mantel (Thermoelement)
- 12: Innenraum
- 13,14: Draht
- 15: Schweissverbindung
- 16,17: Isolation (z.B. MgO-Pulver)
- 18: Abschluss
- 19: Röntgenstrahlung
- a,d: Abstand
- d1,d2,d3: Dicke

## Patentansprüche

1. Verfahren zur zerstörungsfreien Qualitätsprüfung eines insbesondere bei hohen Temperaturen und/oder Vibrationen einsetzbaren Thermoelements (10, 10'), welches Thermoelement (10, 10') wenigstens zwei in einer Ebene im wesentlichen parallel verlaufende Drähte (13, 14) umfasst, die an ihren Enden durch eine Schweissverbindung (15) miteinander verbunden sind, die von einem hermetisch geschlossenen Mantel (11) umgeben sind, und die innerhalb des Mantels (11) in eine Isolation (16, 17) aus einem verdichteten Pulver eingebettet sind, **dadurch gekennzeichnet, dass** das Thermoelement (10, 10') senkrecht zur Ebene der Drähte (13, 14) mittels Röntgenstrahlung (19) durchleuchtet und eine Röntgenaufnahme gemacht wird, dass aus der Röntgenaufnahme die Lage der Drähte (13, 14) in der Nähe der Schweissverbindung (15) bestimmt wird, und dass aus der Lage der Drähte (13, 14) in der Nähe der Schweissverbindung (15) auf die Qualität des Thermoelements (10, 10') geschlossen wird.

2. Verfahren nach Anspruch 1, **dadurch gekennzeichnet, dass** die Qualität des Thermoelements (10, 10') als akzeptabel angenommen wird, wenn die Drähte (13, 14) bis zur Schweissverbindung (15) vollständig parallel verlaufen, und dass die Qualität des Thermoelements (10, 10') als nicht akzeptabel angenommen wird, wenn die Drähte (13, 14) einige Millimeter vor der Schweissverbindung (15) von der parallelen Anordnung abweichend aufeinander zu gebogen bzw. abgekröpft sind.

3. Verfahren nach Anspruch 2, **dadurch gekennzeichnet, dass** die Drähte (13, 14) in der parallelen Anordnung einen vorgegebenen ersten Abstand (d) aufweisen, und dass die Qualität des Thermoelements (10, 10') als nicht akzeptabel angenommen wird, wenn sich der Abstand der Drähte (13, 14) im abgekröpften Bereich um mehr als ein Drittel des ersten Abstandes (d) verringert.

4. Verfahren nach einem der Ansprüche 1 bis 3, **dadurch gekennzeichnet, dass** aus der Röntgenaufnahme zusätzlich die Dicke (d1) des Mantels (11) und/oder der Abstand (a) der Schweissverbindung (15) zum Mantel (11) und/oder die Dicke (d2) der Schweissverbindung (15) und/oder die Dicke (d3) der Drähte (13, 14) ermittelt und zur Qualitätsbestimmung herangezogen wird.

5. Verfahren nach Anspruch 4, **dadurch gekennzeichnet, dass** zusätzlich zur Röntgenaufnahme senkrecht zur Ebene der Drähte (13, 14) eine Röntgenaufnahme in einer um 90° gedrehten Richtung aufgenommen und zur Qualitätsbestimmung herangezogen wird.

## Claims

1. Method for the nondestructive quality testing of a thermocouple (10, 10') which can be used in particular at high temperatures and/or under high levels of vibration, which thermocouple (10, 10') comprises at least two wires (13, 14) which run substantially parallel to one another in one plane, are connected to one another at their ends by a welded joint (15), are surrounded by a hermetically sealed sheath (11) and inside the sheath (11) are embedded in insulation (16, 17) comprising a compacted powder, **characterized in that** the X-radiation (19) is passed through the thermocouple (10, 10') perpendicular to the plane of the wires (13, 14) and an X-ray image is taken, **in that** the position of the wires (13, 14) in the proximity of the welded joint (15) is determined from the X-ray image, and **in that** the quality of the thermocouple (10, 10') is established from the position of the wires (13, 14) in the proximity of the welded joint (15).

2. Method according to Claim 1, **characterized in that** the quality of the thermocouple (10, 10') is deemed acceptable if the wires (13, 14) run completely parallel as far as the welded joint (15), and **in that** the quality of the thermocouple (10, 10') is deemed unacceptable if the wires (13, 14) are angled off or bent toward one another, deviating from the parallel arrangement, a couple of millimetres before the welded joint (15).

3. Method according to Claim 2, **characterized in that** the wires (13, 14) are at a predetermined first distance (d) in the parallel arrangement, and **in that** the quality of the thermocouple (10, 10') is deemed unacceptable if the distance between the wires (13, 14) in the angled-off region is reduced by more than a third of the first distance (d).

4. Method according to one of Claims 1 to 3, **characterized in that** the X-ray image is additionally used to determine the thickness (d1) of the sheath (11) and/or the distance (a) between the welded joint (15) and the sheath (11) and/or the thickness (d2) of the welded joint (15) and/or the thickness (d3) of the wires (13, 14), and these parameters are used for quality determination.

5. Method according to Claim 4, **characterized in that** in addition to the X-ray image perpendicular to the plane of the wires (13, 14), an X-ray image is taken in a direction which is rotated through 90°, and this image is used for quality determination.

## Revendications

1. Procédé de contrôle qualité non destructif d'un thermocouple (10, 10') pouvant être utilisé notamment à des températures et/ou des vibrations élevées, ledit thermocouple (10, 10') comprenant au moins deux fils métalliques (13, 14) qui s'étendent pour l'essentiel en parallèle dans un plan, qui sont reliés entre eux par une liaison soudée (15) à leurs extrémités, qui sont entourés par une enveloppe (11) fermée hermétiquement et qui sont enrobés à l'intérieur de l'enveloppe (11) dans un isolant (16, 17) en poudre comprimée, **caractérisé en ce que** le thermocouple (10, 10') est radiographié perpendiculairement au plan des fils métalliques (13, 14) au moyen de rayons X (19) et une radiographie est effectuée, que la position des fils métalliques (13, 14) à proximité de la liaison soudée (15) est déterminée à partir de la radiographie et que la qualité du thermocouple (10, 10') est déduite à partir de la position des fils métalliques (13, 14) à proximité de la liaison soudée (15).

2. Procédé selon la revendication 1, **caractérisé en ce que** la qualité du thermocouple (10, 10') est considérée acceptable lorsque les fils métalliques (13, 14) sont parfaitement parallèles jusqu'à la liaison soudée (15) et que la qualité du thermocouple (10, 10') est considérée non acceptable lorsque les fils métalliques (13, 14) sont pliés ou coudés l'un vers l'autre en divergeant de la disposition parallèle quelques millimètres avant la liaison soudée (15).

3. Procédé selon la revendication 2, **caractérisé en ce que** les fils métalliques (13, 14) disposés en parallèle présentent un premier écart (d) prédéfini et que la qualité du thermocouple (10, 10') est considérée non acceptable lorsque l'écart entre les fils métalliques (13, 14) dans la zone coudée se réduit de plus d'un tiers du premier écart (d).

4. Procédé selon l'une des revendications 1 à 3, **caractérisé en ce qu'**en outre l'épaisseur (d1) de l'enveloppe (11) et/ou l'écart (a) entre la liaison soudée (15) et l'enveloppe (11) et/ou l'épaisseur (d2) de la liaison soudée (15) et/ou l'épaisseur (d3) des fils métalliques (13, 14) sont déterminés à partir de la radiographie et sont utilisés pour la détermination de la qualité.

5. Procédé selon la revendication 4, **caractérisé en ce qu'**une radiographie pivotée de 90° est effectuée en plus de la radiographie perpendiculairement au plan des fils métalliques (13, 14) et utilisée pour la détermination de la qualité.
